# EUROPEAN PATENT APPLICATION

(11) **EP 3 421 431 A1**
(43) Date of publication of application: **02.01.2019**
(21) Application number: 17756503.3
(22) Date of filing: 21.02.2017
(51) Int. Cl.: C03B 1/02, C03C 1/02, C03C 3/085, C03C 3/087

(54) **GLASS RAW MATERIAL GRANULES AND MANUFACTURING METHOD THEREFOR**

(30) Priority: 26.02.2016 JP 2016035411
(71) Applicant: AGC INC., Chiyoda-ku, Tokyo 1008405 (JP)
(72) Inventor: KUNISA Yasuhiro, Tokyo 100-8405 (JP); MIYAZAKI Seiji, Tokyo 100-8405 (JP); SHINOHARA Nobuhiro, Tokyo 100-8405 (JP); MIYAJIMA Tatsuya, Tokyo 100-8405 (JP)
(74) Representative: Müller-Boré & Partner Patentanwälte PartG mbB
(86) International application number: PCT/JP2017/006427
(87) International publication number: WO 2017/146065

(57) **Abstract**

To provide high-strength granules having a broad range of applications of the glass composition, and a method for their production. The method for producing glass raw material granules comprises mixing and granulating a glass raw material composition with water, wherein the glass raw material composition contains at least silica and an aluminum source, and the aluminum source contains hydraulic alumina.

## Description

### TECHNICAL FIELD

The present invention relates to glass raw material granules and a method for their production.

### BACKGROUND ART

In the production of glass, if a raw material powder is scattered at the time of putting the raw material powder into a melting furnace, there will be such a problem that homogeneity of the glass composition is reduced, or such a problem that the raw material is wasted, and therefore, a method of granulating a raw material powder to use it in the form of glass raw material granules, has been proposed.

On the other hand, as a binder component for the glass raw material granules, the followings have been proposed. Patent Document 1 discloses a method for producing glass raw material granules by using caustic soda or water glass (sodium silicate) as a binder component (1).

Patent Document 2 discloses a method for producing glass raw material granules by using boric acid as a binder component (2).

Patent Document 3 discloses a method using a specific alumina cement and one or both of calcium oxide and calcium hydroxide, as a binder component (3). Further, according to Comparative Examples, even if the specific alumina cement is used, if neither calcium oxide nor calcium hydroxide is added, granules are not formed (Ex. 13), and in a case where aluminum oxide is used in place of the alumina cement, it has been shown that glass raw material granules are not formed even if the amount of calcium hydroxide is increased (Ex. 14).

### PRIOR ART DOCUMENTS

### PATENT DOCUMENTS

Patent Document 1: JP-A-S64-51333
Patent Document 2: WO2012/039327
Patent Document 3: WO 2015/033920

### DISCLOSURE OF INVENTION

### TECHNICAL PROBLEM

The composition of glass is diversified depending on the applications of glass, and, for example, as a glass substrate for various displays, alkali-free glass containing substantially no alkali metal oxide is desired. Further, in recent years, there may be a case where boric acid-free and alkali-free glass containing substantially no boron oxide (B₂O₃) is desired.

On the other hand, the above binder component (1) contains an alkali metal, and therefore, it is difficult to apply it to alkali-free glass. With the above binder component (2), it is difficult to apply it to boric acid-free glass. Further, with the binder component (3), it is difficult to apply it to glass containing substantially no calcium oxide or to glass having a less content of calcium oxide.

Thus, the conventional methods for producing glass raw material granules have limitations with respect to the composition of glass produced in the form of granules, and cannot be said to be sufficient for adaptation to diversification of the glass composition.

The present invention is to provide glass raw material granules with high strength having a broad range of applications of the glass composition, and a method for their production.

### SOLUTION TO PROBLEM

The present invention has the following embodiments.
[1] A method for producing glass raw material granules, comprising mixing and granulating a glass raw material composition with water, wherein the glass raw material composition comprises at least silica and an aluminum source, and the aluminum source contains hydraulic alumina.
[2] The method for producing glass raw material granules according to [1], wherein the content of the hydraulic alumina is from 2 to 30 mass% to the solid content of the glass raw material composition.
[3] The method for producing glass raw material granules according to [1] or [2], wherein the content of the hydraulic alumina is at least 25 mass% as calculated as Al₂O₃, to the aluminum source.
[4] The method for producing glass raw material granules according to any one of [1] to [3], wherein the glass raw material composition has, in the composition based on oxides of glass obtainable from the granules, a content of SiO₂ of from 40 to 75 mass%.
[5] The method for producing glass raw material granules according to any one of [1] to [4], wherein in the composition based on oxides of glass obtainable from the granules, the content of Al₂O₃ is from 3 to 30 mass%.
[6] The method for producing glass raw material granules according to any one of [1] to [5], wherein in the composition based on oxides of glass obtainable from the granules, the total content of Li₂O, Na₂O and K₂O is less than 5 mass%.
[7] The method for producing glass raw material granules according to any one of [1] to [5], wherein in the composition based on oxides of glass obtainable from the granules, the total content of Li₂O, Na₂O and K₂O is from 5 to 20 mass%.
[8] The method for producing glass raw material granules according to any one of [1] to [7], wherein in the composition based on oxides of glass obtainable from the granules, the content of CaO is at most 30 mass%.
[9] The method for producing glass raw material granules according to any one of [1] to [8], wherein in the composition based on oxides of glass obtainable from the granules, the total content of SrO and BaO is at most 40 mass%.
[10] The method for producing glass raw material granules according to any one of [1] to [9], wherein in the composition based on oxides of glass obtainable from the granules, the total content of CaO, SrO and BaO is at most 45 mass%.
[11] A method for producing a glass article, comprising a glass melting step of heating glass raw material granules obtainable by the method for producing glass raw material granules as defined in any one of [1] to [10] to obtain molten glass, a molding step of molding the obtained molten glass, and an annealing step of annealing the glass after the molding.
[12] Glass raw material granules being granules to be used for producing glass, which comprise at least silica and an aluminum source and which have peaks from 0 to 25 ppm and from 60 to 85 ppm in the ²⁷Al MAS NMR spectrum, wherein the ratio of the height y of the peak of from 60 to 85 ppm to the height x of the peak of from 0 to 25 ppm (y/x) is at least 0.04.
[13] A method for producing molten glass, comprising a glass melting step of heating the glass raw material granules as defined in [12] to obtain molten glass.
[14] A method for producing a glass article using the production method for molten glass as defined in [13], which comprises said glass melting step, a molding step of molding the obtained molten glass, and an annealing step of annealing the glass after the molding.

### ADVANTAGEOUS EFFECTS OF INVENTION

The glass raw material granules of the present invention can be used for the production of glass having a glass composition comprising SiO₂ and Al₂O₃ and have a broad range of applications of the glass composition and have high strength.

According to the production method of the present invention, it is possible to produce granules for producing glass having a glass composition comprising SiO₂ and Al₂O₃.

### BRIEF DESCRIPTION OF DRAWING

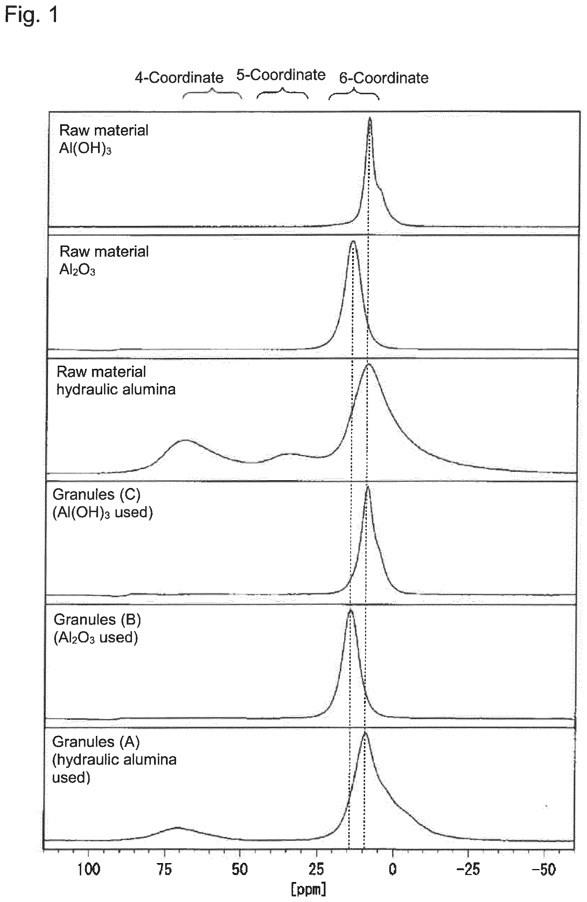

Fig. 1 shows ²⁷Al MAS NMR spectra of aluminum sources used and granules obtained in Examples and Comparative Examples.

### DESCRIPTION OF EMBODIMENTS

The following definitions of terms apply throughout this specification including claims.

Components of glass are represented by oxides such as SiO₂, Al₂O₃, etc. The content of each component to the entire glass (glass composition) is represented by a mass% on the oxide basis based on the mass of glass being 100%.

A "glass raw material" is a raw material which becomes a constituent of glass, and a "glass raw material composition" is a composition comprising a plurality of glass raw materials. Glass raw materials may be oxides or composite oxides, or compounds which can be converted to oxides by thermal decomposition. The compounds which can be converted to oxides by thermal decomposition, may be hydroxides, carbonates, nitrates, sulfates, halides, etc.

"Granules" are ones having a glass raw material composition granulated, and may be referred to also as "glass raw material granules".

The composition of a glass raw material composition is represented by mass% on the solid content basis. That is, it is represented by a mass percentage on such a basis that the solid content mass of a glass raw material composition is 100 mass%, and in a case where the glass raw material composition contains an aqueous solution, it is a composition including solid contents in the aqueous solution. In addition, the solid content includes water of crystallization.

"D50" is an average particle diameter represented by a 50% diameter in cumulative fraction.

D50 of a glass raw material is a 50% diameter in cumulative fraction on the volume basis measured by using a laser diffraction method. As a particle diameter measuring method according to a laser diffraction method, a method described in JIS Z8825-1 (2001) is used.

D50 of granules is a median diameter at a mass cumulative 50% measured by a sieving method.

### <Glass raw material composition>

In the present invention, glass raw material granules are produced by granulating a glass raw material composition in the presence of water. That is, the glass raw material composition is a composition comprising all solid contents to be used for granulation.

The glass raw material composition comprises at least silica and an aluminum source. It may contain known compounds as other glass raw materials.

### [Silica]

Silica may be silica sand, quartz, cristobalite, amorphous silica, etc. One of them may be used alone, or two or more of them may be used in combination. Silica sand is preferred in that raw material of good quality is readily available. These are used in powder form.

D50 of silica is preferably from 5 to 350 µm. When D50 of silica is at least 5 µm, handling will be easy, and granulation will be easy. When it is at most 350 µm, homogeneous granules can be readily obtainable.

The content of silica to the total solid content in the glass raw material composition is preferably from 40 to 75 mass%, more preferably from 40 to 70 mass%, further preferably from 40 to 65 mass%. When the content of silica is at least the lower limit value in the above range, granules tend to be less likely to adhere to the wall surface, etc. of the granulator, whereby handling will be easy, and when the content of silica is at most the upper limit value in the above range, the strength of granules tends to be high.

### [Aluminum source]

The aluminum source is a compound which forms Al₂O₃ in the step of producing molten glass.

In the present invention, as the aluminum source, at least hydraulic alumina is used. Hydraulic alumina means alumina which is obtainable by heat-treating aluminum hydroxide and which at least partially has rehydratable properties. Hydraulic alumina may contain minor components other than Al₂O₃ but does not substantially contain CaO unlike alumina cement. Here, "substantially" is meant that, for example, a case where it contains an impurity at a level of at most 0.5 mass% is acceptable.

The Al₂O₃ content in hydraulic alumina is preferably at least 95 mass%, more preferably at least 98 mass%, particularly preferably at least 99.5 mass%.

D50 of hydraulic alumina is not particularly limited, but is preferably from 2 to 30 µm, more preferably from 4 to 20 µm. When said D50 is at least the lower limit value in the above range, handling will be easy, and when it is at most the upper limit value in the above range, granules with a homogeneous composition can be easily obtained.

The content of hydraulic alumina to the solid content of the glass raw material composition may be suitably set depending upon the glass composition to be obtained, but, from the viewpoint of the strength, is preferably from 2 to 30 mass%, more preferably from 5 to 30 mass%, further preferably from 10 to 30 mass%. When the content of hydraulic alumina is in the above range, good granules will be obtained. When the content is at least 2 mass%, it is possible to secure a necessary strength as granules, and on the other hand, when it is at most 30 mass%, the added water content during granulation will not be too much, excessive heat will not be caused during granulation, and it is possible to secure the necessary strength of granules.

To the total amount of the aluminum source, the proportion of hydraulic alumina is preferably from 25 to 100 mass% as calculated as Al₂O₃. When the proportion is within the above range, granules with high strength can easily be obtained. Further, without agglomeration due to abrupt granulation and without taking too much time for granulation, the control of the particle size becomes easy, and it becomes easy to obtain granules with a desired particle size.

As the aluminum source, in addition to hydraulic alumina, one or more other aluminum sources may be used in combination. As such other aluminum sources, aluminum oxide (alumina), aluminum hydroxide, feldspar, a sulfate, chloride, fluoride, etc. of aluminum may be mentioned. A sulfate, chloride or fluoride of aluminum may function as a fining agent.

D50 of aluminum hydroxide is not particularly limited, but is preferably from 2 to 100 µm, more preferably from 5 to 60 µm. D50 of aluminum oxide is not particularly limited, but is preferably from 2 to 100 µm, more preferably from 4 to 60 µm.

### [Alkali metal source]

The alkali metal in the present invention is meant for Na, K and/or Li. The alkali metal source is a compound which becomes to be a Na₂O, K₂O or Li₂O component in the process for production of molten glass. The alkali metal source may be a carbonate, sulfate, nitrate, oxide, hydroxide, chloride or fluoride of an alkali metal. One type of them may be used alone, or two or more types of them may be used in combination. A sulfate, chloride or fluoride of an alkali metal may function as a fining agent.

To prevent agglomeration of granules, it is preferred to use an alkali metal carbonate. For example, sodium carbonate (soda ash), potassium carbonate or lithium carbonate is preferred.

D50 of the alkali metal carbonate is not particularly limited, but is preferably from 50 to 400 µm, more preferably from 55 to 120 µm. When said D50 is in the above range, granulation will be easy, and homogeneous granules can easily be obtained.

In the case of using alkali metal carbonates, the total content of the alkali metal carbonates to the solid content in the glass raw material composition is preferably from 5 to 30 mass%, more preferably from 10 to 26 mass%. When at least the above lower limit value, the effect of preventing agglomeration of granules will be excellent, and when at most the above upper limit value, the strength of granules will be excellent.

### [Alkaline earth metal source]

The alkaline earth metal in the present invention is meant for Mg, Ca, Ba and/or Sr. The alkaline earth metal source is a compound which forms MgO, CaO, BaO or SrO in the process for production of molten glass. As the alkaline earth metal source, a carbonate, sulfate, nitrate, oxide, hydroxide, chloride or fluoride of an alkaline earth metal may be mentioned. One type of them may be used alone, or two to more types of them may be used in combination. As the alkaline earth metal source, a powder is preferred. A sulfate, chloride or fluoride of an alkaline earth metal may function as a fining agent.

Further, it is possible to use a composite carbonate such as dolomite, or a composite oxide such as burnt dolomite.

The alkaline earth metal source, with a view to acceleration of a hydration reaction of hydraulic alumina, is preferably an alkaline earth metal hydroxide, but from the viewpoint of availability of raw material, is preferably an alkaline earth metal carbonate, and thus, it can be selectively used as the case requires.

In the case of using the alkaline earth metal source, the total content of the alkaline earth metal source to the solid content of the glass raw material composition is preferably more than 0 to 60 mass%, more preferably more than 0 to 55 mass%. Within the above range, it will be easy to obtain granules with high strength.

### [Other glass raw materials]

The glass raw material composition may contain, in addition to the compounds listed above, other compounds known as glass raw materials.

For example, as a component to become a refining agent or color tone adjustment agent, a chloride component such as sodium chloride, magnesium chloride, potassium chloride, calcium chloride, strontium chloride, aluminum chloride, etc.; a sulfate component such as sodium sulfate, magnesium sulfate, potassium sulfate, calcium sulfate, aluminum sulfate, etc.; a nitrate component such as sodium nitrate, magnesium nitrate, potassium nitrate, calcium nitrate, etc.; aluminum fluoride, fluorite (CaF₂), tin oxide (SnO, SnO₂), antimony oxide (Sb₂O₃), iron oxide (Fe₂O₃, Fe₃O₄), titanium oxide (TiO₂), cerium oxide (CeO₂), cobalt oxide (CoO), chromium (III) oxide (Cr₂O₃), selenium (Se), copper oxide (CuO), etc., may be mentioned. One type of these may be used alone, or two or more types of these may be used in combination.

### [Composition of glass raw material composition]

The composition of the glass raw material composition is adjusted to become substantially the same as the composition of a desired glass article as calculated as oxides, except for easily volatilizable components in the glass melting step. In the method of the present invention, a hydraulic alumina is used, whereby good granules can be produced even if the glass raw material composition does not contain a binder component such as caustic soda, boric acid or alumina cement.

### [Glass composition]

The composition of glass (hereinafter referred to also as the glass composition (G)) obtainable from the granules may be one comprising SiO₂ and Al₂O₃. The glass composition (G) is the composition of a desired glass article.

In the glass composition (G), SiO₂ is preferably from 40 to 75 mass%, more preferably from 40 to 70 mass%, particularly preferably from 45 to 65 mass%. Al₂O₃ is preferably from 3 to 30 mass%, more preferably from 5 to 30 mass%, particularly preferably from 7 to 25 mass%.

In the glass composition (G), the total of SiO₂ and Al₂O₃ is preferably from 43 to 92 mass%, more preferably from 45 to 90 mass%, particularly preferably from 50 to 85 mass%.

According to the method in one embodiment of the present invention, it is possible to produce good granules even without using boric acid. Therefore, the method is applicable to the production of granules for producing glass with a composition which does not substantially contain B₂O₃. For example, the glass composition (G) may be one wherein the B₂O₃ content is at most 5 mass%. Further, B₂O₃ may be at most 0.5 mass%, and furthermore, the method is applicable to the glass composition (G) containing no B₂O₃ other than unavoidable impurities.

According to the method in one embodiment of the present invention, it is possible to produce good granules even without using caustic soda. Therefore, the method is applicable to the production of granules for producing glass with a composition which does not substantially contain alkali metal oxides.

For example, the glass composition (G) may be one wherein the total content of Li₂O, Na₂O and K₂O is less than 5 mass%. Further, the total may be at most 2 mass%, and furthermore, the method is applicable to the glass composition (G) not containing Li₂O, Na₂O or K₂O other than unavoidable impurities, for example, one wherein their total is at most 1 mass%.

According to the method in one embodiment of the present invention, it is possible to produce granules for producing glass with a composition containing alkali metal oxides without using caustic soda.

For example, the method is applicable to the glass composition (G) wherein the total content of Li₂O, Na₂O and K₂O is preferably at least 5 mass%. The upper limit for the total content of Li₂O, Na₂O and K₂O is, from the viewpoint of the balance with other components, preferably at most 20 mass%, more preferably at most 15 mass%, particularly preferably at most 12 mass%.

According to the method in one embodiment of the present invention, it is possible to produce good granules without using a binder component consisting of alumina cement and calcium oxide and/or calcium hydroxide. Thus, the glass may be of a composition which does not substantially contain calcium oxide, and the method is applicable also to the production of granules for producing glass with a composition not substantially containing CaO, SrO or BaO.

For example, the glass composition (G) may be one wherein the content of CaO is at most 30 mass%, at most 10 mass%, or at most 5 mass%, and further, the method is applicable to the glass composition (G) containing no CaO other than unavoidable impurities.

Further, the glass composition (G) may be one wherein the total content of SrO and BaO is at most 40 mass%, at most 30 mass% or at most 20 mass%, and further, the method is applicable to the glass composition (G) not containing SrO or BaO other than unavoidable impurities.

Further, the glass composition (G) may be one wherein the total content of CaO, SrO and BaO is at most 45 mass%, at most 40 mass% or at most 35 mass%, and further, the method is applicable to the glass composition (G) not containing CaO, SrO or BaO other than unavoidable impurities.

As preferred embodiments of the glass composition (G), the following glass compositions may be mentioned.

In each of the following glass compositions, the content of B₂O₃ is from 0 to 5 mass%, preferably from 0 to 1 mass%, particularly preferably 0 mass% (0 mass% is meant for the detection limit or less; the same applies hereinafter).

### (Glass composition (i))

SiO₂ is from 40 to 72 mass%, Al₂O₃ is from 17 to 30 mass%, MgO is from 1 to 20 mass%, CaO is from 2 to 30 mass%, and the total of these is from 80 to 100 mass%. Further, the total content of Li₂O, Na₂O and K₂O is less than 5 mass%, preferably at most 2 mass%, particularly preferably 0 mass%.

### (Glass composition (ii))

SiO₂ is from 40 to 60 mass%, Al₂O₃ is from 5 to 20 mass%, B₂O₃ is from 0 to 5 mass%, MgO is from 0 to 5 mass%, CaO is from 0 to 6 mass%, SrO is from 5 to 25 mass%, BaO is from 10 to 30 mass%, the total of CaO, SrO and BaO is from 15 to 45 mass%, and the total of these is from 80 to 100 mass%. Further, the total content of Li₂O, Na₂O and K₂O is less than 5 mass%, preferably at most 2 mass%, particularly preferably 0 mass%.

### (Glass composition (iii-1))

SiO₂ is from 55 to 75 mass%, Al₂O₃ is from 3 to 25 mass%, the total of Li₂O, Na₂O and K₂O is from 10 to 20 mass%, the total of MgO, CaO, SrO and BaO is from 0 to 25 mass%, and the total of these is from 80 to 100 mass%.

### (Glass composition (iii-2))

SiO₂ is from 60 to 70 mass%, Al₂O₃ is from 9 to 20 mass%, the total of Li₂O, Na₂O and K₂O is from 11 to 19 mass%, the total of MgO, CaO, SrO and BaO is from 1 to 15 mass%, the total of ZrO₂ and TiO₂ is from 0 to 4 mass%, Fe₂O₃ is from 0 to 9 mass%, Co₃O₄ is from 0 to 2 mass%, and the total of these is from 80 to 100 mass%.

### <Method for producing glass raw material granules>

The method for producing glass raw material granules of the present invention comprises a granulation step of mixing and granulating a glass raw material composition with water. As the case requires, it is preferred to further have a heat drying step of heating and drying. As a method for supplying water to a glass raw material composition, a method of adding a part of the glass raw material in a form of an aqueous solution, may be used.

The granulation step may be carried out by using a known granulation method as appropriate. For example, a tumbling granulation method, an agitation granulation method, a compression granulation method, or a method of crushing a molded product obtained by compression molding, may suitably be used. A tumbling granulation method is preferred in that it is thereby easy to produce homogeneous granules with a relatively small particle size.

### [Tumbling granulation method]

The tumbling granulation method is a granulation method wherein a container containing a raw material having water and a binder added to a powder is rotated to let particles be tumbled on a wall surface or the like, so that around core particles, other particles will adhere for grain growth. The container for tumbling granulation may be provided with stirring blades or chopper. By the stirring blades or chopper, overgrown granules will be disintegrated, so that granules of a proper size will be obtained.

As the tumbling granulation method, preferred is, for example, a method wherein a powder of the glass raw material composition is placed in the container of the tumbling granulator, and while mixing and stirring the raw material powder by vibrating and/or rotating the container, a predetermined amount of water is sprayed to the raw material powder for granulation.

As the tumbling granulator, a known apparatus may suitably be used. For example, EIRICH Intensive Mixer (Nippon Eirich Co., Ltd.) may be mentioned.

With respect to the amount of water, if it is too large, it takes a long time for drying, but if it is too small, strength of granules tends to be insufficient, and therefore, it is preferred to set it so that these disadvantages do not occur. For example, the amount of water is preferably from 5 to 25 mass%, more preferably from 9 to 23 mass%, in the entire raw material to be granulated (the total of water and all solid contents in the glass raw material composition).

If the amount of water in the entire raw material to be granulated is insufficient, it tends to be difficult to obtain strong granules, and if it is excessive, granules are likely to adhere to the surface of the apparatus such as the mixer at the time of mixing.

The particle size of granules can be controlled by the intensity of stirring and the stirring time (granulation time).

After the granulation, the obtained particles are preferably heated and dried. This can be carried out by a known heat-drying method. For example, by using a hot air dryer, a method of heating at a temperature of from 100 to 200°C for from 0.5 to 12 hours may be used.

### <Glass raw material granules>

The average particle diameter (D50) of granules is not particularly limited, but, from the viewpoint of preventing scattering of the raw material, is preferably at least 300 µm, more preferably at least 500 µm. Further, from the viewpoint of efficiency in melting, it is preferably at most 2 mm, more preferably at most 1.5 mm. The size of granules is preferably selected to be a size suitable within the above range, depending on the method for producing molten glass by using the granules.

In a case where the granules are to be used in a method of melting by a melting method other than an in-flight melting method to be described later, when the average particle diameter (D50) is at least 1 mm, it will be easy to prevent formation of bubbles in molten glass.

In the case of melting the granules in an in-flight melting method, the average particle diameter (D50) of the granules is preferably at most 1,000 µm, more preferably at most 800 µm. When the average particle diameter is at most 1,000 µm, at the time of melting in the in-flight heating device, vitrification sufficiently proceeds to inside of the granules, such being preferred.

In granules obtainable by the production method of the present invention, as the aluminum source, at least hydraulic alumina is used, whereby a good granulation property is obtainable, and it is possible to obtain granules having a sufficient strength. The granules obtainable by the production method of the present invention have characteristic peaks derived from hydraulic alumina in the ²⁷Al MAS NMR spectrum.

That is, as the state of presence of Al in an aluminum compound, there may be one where the coordination number is 4, 5 or 6, and the ratio thereof can be measured by the solid ²⁷Al-NMR measurement.

As shown in Fig. 1, in the ²⁷Al MAS NMR spectrum, a peak of 6-coordinate is observed in the vicinity of from 0 to 25 ppm, a peak of 5-coordinate is observed in the vicinity of from 30 to 50 ppm, and a peak of 4-coordinate is observed in the vicinity of from 60 to 85 ppm.

In the state of raw material before granulation, hydraulic alumina has peaks of 6-coordinate, 5-coordinate and 4-coordinate, and in the spectrum of granules (A) produced by using the hydraulic alumina, although the peak of 5-coordinate is not observed, peaks of 4-coordinate and 6-coordinate are present.

Whereas, aluminum oxide as raw material, granules (B) produced by using it, aluminum hydroxide as raw material, and granules (C) produced by using it, have a peak of 6-coordinate, but have no peak of 4-coordinate or 5-coordinate observed.

The glass raw material granules of the present invention comprises at least silica and an aluminum source, and has, in the ²⁷Al MAS NMR spectrum, a peak from 0 to 25 ppm and a peak from 60 to 85 ppm, wherein the ratio of the height y of the peak from 60 to 85 ppm to the height x of the peak from 0 to 25 ppm (y/x) is at least 0.04.

The ratio (y/x) of the heights of the peaks being at least 0.04 means that Al of 4-coordinate is substantially present. Al of 4-coordinate being present means that granules are ones produced by using hydraulic alumina as at least a part of the aluminum source.

### <Method for producing molten glass>

The method for producing molten glass of the present invention comprises a glass melting step (hereinafter referred to also as a melting step) of heating the granules of the present invention to obtain molten glass. The melting step may be conducted by using a crucible kiln or a Siemens-type glass melting furnace, or may be carried out by an electric melting process. Either one may be carried out by a known method.

### [In-flight melting method]

One embodiment of the melting process comprises a step of forming the granules of the present invention into molten glass particles by an in-flight melting method, and a step of collecting the molten glass particles to obtain molten glass.

Specifically, firstly, the granules are introduced into a high temperature gas phase atmosphere in an in-flight heating device. As the in-flight heating device, a known one may be used. The granules of the present invention are excellent in strength, whereby it is possible to avoid formation of a fine powder, even if collision among particles to one another, or collision between particles and the inner wall of transporting passage, etc. occurs during transport or during introduction.

Then, molten glass particles melted in the in-flight heating device are collected to obtain glass melt, and molten glass taken out from there, then it will be supplied to the next molding step. The method of collecting molten glass particles may, for example, be a method wherein molten glass particles falling by their own weight in the gas phase atmosphere is received by and collected in a heat-resistant container provided at a lower portion of the gas phase atmosphere.

### <Method for producing glass article>

The method for producing a glass article of the present invention is a method of producing a glass article by using the production method for molten glass of the present invention. Firstly, molten glass obtained by the melting step is molded into a desired shape in a molding step, followed by annealing in an annealing step as the case requires. Thereafter, as the case requires, post-processing such as cutting or polishing may be applied by a known method in a post-processing step to obtain a glass article.

In a case where the glass article is a plate-shaped, in the molding step, molding into a desired shape is carried out by a known method such as a float method, a down draw method, a slit down draw method, a fusion method, a roll out method, a drawing method, etc., followed by annealing as the case requires, to obtain a glass article.

### EXAMPLES

In the following, the present invention will be described in further detail with reference to Examples, but the present invention is not limited to these Examples.

### [Glass composition]

As the glass composition, four types of glass materials A to D shown in Table 1 were used. The glass composition shown in Table 1 is represented by mass percentage (unit: mass%) based on oxides.

Glass material A is alkali-free glass free from boric acid, corresponding to the above-mentioned glass composition (i).

Glass material B is alkali-free glass free from boric acid, corresponding to the above-mentioned glass composition (ii).

Glass material C is boric acid-free glass corresponding to the above-mentioned glass composition (iii-2).

Glass material D is boric acid-free glass corresponding to the above-mentioned glass composition (iii-1).

### [Glass raw materials]

Raw materials used are shown in Table 2. As hydraulic alumina, BK112 (product name of Sumitomo Chemical Company, Limited, Al₂O₃ : 99.7 mass% (catalog value)) was used.

**[Table 1]**

| | Glass composition [mass%] | | | |
|---|---|---|---|---|
| | Glass material A | Glass material B | Glass material C | Glass material D |
| SiO₂ | 64.0 | 49.9 | 64.3 | 64.8 |
| Al₂O₃ | 20.0 | 7.7 | 9.1 | 16.1 |
| MgO | 8.5 | - | 6.0 | 5.2 |
| CaO | 7.5 | 3.7 | - | - |
| SrO | - | 11.8 | - | - |
| Na₂O | - | - | 11.1 | 13.8 |
| K₂O | - | - | - | 0.1 |
| Fe₂O₃ | - | - | 8.1 | - |
| Co₃O4 | - | - | 1.4 | - |
| BaO | - | 26.9 | - | - |
| Total | 100.0 | 100.0 | 100.0 | 100.0 |

**[Table 2]**

| Glass raw materials | | Average particle diameter D50 [µm] |
|---|---|---|
| Silica sand | SiO₂ | 13.1 |
| Hydraulic alumina | Al₂O₃·nH₂O | 15.8 |
| Aluminum oxide | Al₂O₃ | 4.1 |
| Aluminum hydroxide | Al(OH)₃ | 60.0 |
| Magnesium hydroxide | Mg(OH)₂ | 4.0 |
| Soda ash | Na₂CO₃ | 83.3 |
| Sodium metasilicate nonahydrate | Na₂SiO₃·9H₂O | 430.5 |
| Potassium carbonate | K₂CO₃ | 432.4 |
| Barium carbonate | BaCO₃ | 4.7 |
| Hydrated lime (1) | Ca(OH)2 | 0.36 |
| Hydrated lime (2) | Ca(OH)₂ | 0.44 |
| Strontium carbonate | SrCO₃ | 6.3 |
| Hematite | Fe₂O₃ | 32.6 |
| Magnetite | Fe₃O₄ | 3.7 |
| Cobalt oxide | CoO | 110.0 |
| Fluorite | CaF2 | 19.6 |
| Aluminum chloride | AlCl₃·6H₂O | 314.3 |
| Aluminum sulfate | Al₂(SO₄)₃·14H₂O | 477.0 |

### <Examples 1 to 7, Comparative Examples 1 to 3: Production of granules>

### [Formulation of glass raw material composition]

The formulation of the glass raw material composition in each Example is shown in Table 3 or 4.

Granules were produced in accordance with the formulation (glass raw material composition and water) and production conditions (granulation time) as shown in Table 3 or 4.

As the granulator, EIRICH Intensive Mixer (Nippon Eirich Co., Ltd., Model: R02 type, capacity 5 L, rotor: star-type) was used.

Glass raw materials were put in the granulator and pre-mixed for 60 seconds at a pan rotational speed of 42 rpm and a rotor rotational speed of 900 rpm. After the premixing, while maintaining the pan rotational speed of 42 rpm, water was charged in an amount as shown in Table 3 or 4.

Then, by adjusting the rotor rotational speed to be 3,000 rpm, granulation was conducted so that in a granulating time shown in Table 3 or 4, the average particle diameter would be at least 300 µm and at most 1 mm, and then the product was taken out from the granulator and dried by a tray dryer for 12 hours under such a condition that the temperature of the heating chamber was 120°C, to obtain granules.

### <Evaluation>

### [D50 (unit: µm) of granules]

With respect to the obtained granules, by means of an automatic sieving meter (Seishin Enterprise Co., Ltd., robot shifter, RPS-105), measurements of the particle size distribution and average particle diameter (D50) were conducted. Here, the opening sizes of eight sieves used in the automatic sieving meter were 106 µm, 250 µm, 355 µm, 500 µm, 710 µm, 1,000 µm, 1,400 µm and 2,000 µm. The measurement results of D50 are shown in Table 3 or 4.

### [Fine rate (unit: mass%)]

15 g of the obtained granules were shaken for 60 minutes (simulated fracture test) by a shaker (manufactured by AS ONE Corporation, product name: AS-1N), and then, by means of an automatic sieving meter (Seishin Enterprise Co., Ltd., robot shifter, RPS-105), the content (unit: mass%) of fine powder with a particle size of less than 106 µm passed through a sieve with an opening size of 106 µm, was measured. The results are shown in Table 3 or 4. The lower the fine rate, the higher the strength of the granules.

**[Table 3]**

| | | | Example 1 | Example 2 | Example 3 | Example 4 | Comparative Example 1 |
|---|---|---|---|---|---|---|---|
| Glass composition | | | Glass material A | Glass material A | Glass material A | Glass material A | Glass material A |
| Formulation of glass raw material composition [mass%] | Silica | Silica sand | 59 | 59 | 59 | 59 | 59 |
| | Aluminum source | Hydraulic alumina | 19 | 15 | 10 | 5 | 0 |
| | | Aluminum oxide | 0 | 5 | 9 | 14 | 18 |
| | | Aluminum hydroxide | 0 | 0 | 0 | 0 | 0 |
| | Magnesium source | Magnesium hydroxide | 12 | 12 | 12 | 12 | 12 |
| | Sodium source | Soda ash | 0 | 0 | 0 | 0 | 0 |
| | | Sodium metasilicate nonahydrate | 0 | 0 | 0 | 0 | 0 |
| | Potassium source | Potassium carbonate | 0 | 0 | 0 | 0 | 0 |
| | Barium source | Barium carbonate | 0 | 0 | 0 | 0 | 0 |
| | Calcium source | Hydrated lime (1) | 9 | 9 | 9 | 9 | 9 |
| | | Hydrated lime (2) | 0 | 0 | 0 | 0 | 0 |
| | Strontium source | Strontium carbonate | 0 | 0 | 0 | 0 | 0 |
| | Iron source | Hematite | 0.02 | 0.03 | 0.03 | 0.02 | 0.02 |
| | | Magnetite | 0 | 0 | 0 | 0 | 0 |
| | Cobalt source | Cobalt oxide | 0 | 0 | 0 | 0 | 0 |
| | Fluorine source | Fluorite | 0 | 0 | 0 | 0 | 0 |
| | Chlorine source | Aluminum chloride | 0 | 0 | 0 | 0 | 0 |
| | Sulfur source | Aluminum sulfate | 1.1 | 1.1 | 1.1 | 1.1 | 1.1 |
| | Total (solid content) [mass%] | | 100 | 100 | 100 | 100 | 100 |
| Hydraulic alumina/aluminum source (calculated on Al₂O₃) [mass%] | | | 100 | 75 | 50 | 25 | 0 |
| Total glass raw material (total solid content) [parts by mass] | | | 3000 | 3000 | 3000 | 3000 | 3000 |
| Added water [parts by mass] | | | 896 | 797 | 727 | 636 | 529 |
| Water/(water+total solid content) [mass%] | | | 23 | 21 | 20 | 18 | 15 |
| Granulation time [min] | | | 10 | 16 | 12 | 13 | 16 |
| Average particle diameter of granules D50 [µm] | | | 584 | 631 | 740 | 799 | Granulation was impossible |
| Fine rate [mass%] | | | 0.74 | 0.47 | 0.80 | 0.67 | |

**[Table 4]**

| | | | Example 5 | Example 6 | Example 7 | Comparative Example 2 | Comparative Example 3 |
|---|---|---|---|---|---|---|---|
| Glass composition | | | Glass material B | Glass material C | Glass material D | Glass material D | Glass material D |
| | Silica | Silica sand | 42 | 58 | 57 | 57 | 53 |
| | Aluminum source | Hydraulic alumina | 6 | 9 | 15 | 0 | 0 |
| | | Aluminum oxide | 0 | 0 | 0 | 14 | 0 |
| | | Aluminum hydroxide | 0 | 0 | 0 | 0 | 20 |
| | Magnesium source | Magnesium hydroxide | 0 | 8 | 7 | 7 | 6 |
| | Sodium source | Soda ash | 0 | 17 | 21 | 20 | 19 |
| Formulation of glass raw material composition [mass%] | | Sodium metasilicate nonahydrate | 0 | 0 | 0 | 2 | 2 |
| | Potassium source | Potassium carbonate | 0 | 0 | 0.2 | 0.2 | 0.1 |
| | Barium source | Barium carbonate | 29 | 0 | 0 | 0 | 0 |
| | Calcium source | Hydrated lime (1) | 0 | 0 | 0 | 0 | 0 |
| | | Hydrated lime (2) | 4 | 0 | 0 | 0 | 0 |
| | Strontium source | Strontium carbonate | 14 | 0 | 0 | 0 | 0 |
| | Iron source | Hematite | 0 | 0 | 0 | 0 | 0 |
| | | Magnetite | 0 | 7 | 0 | 0 | 0 |
| | Cobalt source | Cobalt oxide | 0 | 1 | 0 | 0 | 0 |
| | Fluorine source | Fluorite | 0.4 | 0 | 0 | 0 | 0 |
| | Chlorine source | Aluminum chloride | 3 | 0 | 0 | 0 | 0 |
| | Sulfur source | Aluminum sulfate | 0.8 | 0.4 | 1.1 | 0.2 | 0.2 |
| | Total (solid content) [mass%] | | 100 | 100 | 100 | 100 | 100 |
| Hydraulic alumina/aluminum source (calculated on Al₂O₃) [mass%] | | | 99 | 100 | 100 | 0 | 0 |
| Total glass raw material (total solid content) [parts by mass] | | | 3000 | 3000 | 3000 | 3000 | 3000 |
| Added water [parts by mass] | | | 499 | 559 | 670 | 458 | 458 |
| Water/(water+total solid content) [mass%] | | | 14 | 16 | 18 | 13 | 13 |
| Granulation time [min] | | | 10 | 9 | 13 | 14 | 11 |
| Average particle diameter of granules D50 [µm] | | | 869 | 782 | 701 | 641 | 849 |
| Fine rate [mass%] | | | 1.67 | 0.34 | 0.40 | 4.90 | 15.7 |
| | | | | | Granules A | Granules B | Granules C |

As shown by the results in Tables 3 and 4, in Examples 1 to 7 wherein hydraulic alumina was used as the aluminum source, it was possible to obtain granules having sufficient strength with a fine rate of the granules being less than 2%.

That is, in Examples 1 to 5, it was possible to obtain granules having a glass composition free from boric acid and free from alkali (glass material A or B) and having a sufficient strength.

On the other hand, in Comparative Example 1 wherein in the glass composition of glass material A, no hydraulic alumina was used, and instead, aluminum oxide was used, the grains did not grow and mostly remained powdery (granulation was impossible).

In Examples 6 and 7, it was possible to produce granules having sufficient strength with a glass composition (glass material C or D) containing an alkali metal oxide and not containing calcium oxide or boric acid, without using caustic soda.

On the other hand, in Comparative Examples 2 and 3 wherein in the glass composition of glass material D, no hydraulic alumina was used, and instead, aluminum oxide or aluminum hydroxide was used, and further, as a binder, sodium silicate (water glass) was used, although granules were obtained, their strength was insufficient, and the fine rate was also high.

### <Test Example>

As the presence state of Al in an aluminum compound, there may be one where the coordination number is 4, 5 or 6. The ratio thereof can be measured by the solid ²⁷Al-NMR measurement.

With respect to the aluminum source used in each of Example 7 and Comparative Examples 2 and 3, and the granules A, B or C obtained in each Example, the solid ²⁷Al-NMR measurements were carried out. The measurement conditions were as follows. In the obtainable ²⁷Al MAS NMR spectrum, in the vicinity of from 0 to 25 ppm, a peak of 6-coordinate is observed, in the vicinity of from 30 to 50 ppm, a peak of 5-coordinate is observed, and in the vicinity of from 60 to 85 ppm, a peak of 4-coordinate is observed. The results are shown in Fig. 1.

### [Conditions for solid ²⁷Al-NMR measurements]

Apparatus: manufactured by JEOL Ltd., ECA600,
Pulse width: 0.53 µsec (FA: 30°),
Number of integration: 256 times,
External reference: Al(NO₃)₃ (0 ppm),
MAS speed: about 22 kHz,
P.D.: 3 sec,
Number of points: 2,048,
Sample tube: made of ZrO₂, 3.2 mmΦ,
BF: 50 to 100 Hz.

Preparation method of sample: A sample was ground in a mortar and then packed into the sample tube.

As shown in Fig. 1, while aluminum hydroxide and aluminum oxide show 6-coordinate, hydraulic alumina shows in addition to 6-coordinate, 4-coordinate and 5-coordinate.

Granules B obtained in Comparative Example 2 showed a spectrum equal to the raw material aluminum oxide. Granules C obtained in Comparative Example 3 also showed a spectrum substantially equal to the raw material aluminum hydroxide.

In contrast, granules A obtained in Example 7 showed a spectrum different from the raw material hydraulic alumina, and it is considered that the reaction had progressed during the synthesis of granules. And, it is considered that the reacted hydraulic alumina served as a binder and thus contributed to a decrease of the fine rate.

In the spectrum of granules (A), the ratio (y/x) of the height y of the peak of 4-coordinate to the height x of the peak of 6-coordinate was 0.1233.

### INDUSTRICAL APPLICABILITY

The glass raw material granules of the present invention are useful in a wide range, for example, for the production of glass products in various shapes such as plate-shape and for various applications.

The entire disclosure of Japanese Patent Application No. 2016-035411 filed on February 26, 2016 including specification, claims, drawings and summary is incorporated herein by reference in its entirety.

## Claims

1. A method for producing glass raw material granules, comprising mixing and granulating a glass raw material composition with water, wherein the glass raw material composition comprises at least silica and an aluminum source, and the aluminum source contains hydraulic alumina.

2. The method for producing glass raw material granules according to Claim 1, wherein the content of the hydraulic alumina is from 2 to 30 mass% to the solid content of the glass raw material composition.

3. The method for producing glass raw material granules according to Claim 1 or 2, wherein the content of the hydraulic alumina is at least 25 mass% as calculated as Al₂O₃, to the aluminum source.

4. The method for producing glass raw material granules according to any one of Claims 1 to 3, wherein the glass raw material composition contains silica in such an amount that based on oxides of glass obtainable from the granules, the content of SiO₂ corresponds to from 40 to 75 mass%.

5. The method for producing glass raw material granules according to any one of Claims 1 to 4, wherein in the composition based on oxides of glass obtainable from the granules, the content of Al₂O₃ is from 3 to 30 mass%.

6. The method for producing glass raw material granules according to any one of Claims 1 to 5, wherein in the composition based on oxides of glass obtainable from the granules, the total content of Li₂O, Na₂O and K₂O is less than 5 mass%.

7. The method for producing glass raw material granules according to any one of Claims 1 to 5, wherein in the composition based on oxides of glass obtainable from the granules, the total content of Li₂O, Na₂O and K₂O is from 5 to 20 mass%.

8. The method for producing glass raw material granules according to any one of Claims 1 to 7, wherein in the composition based on oxides of glass obtainable from the granules, the content of CaO is at most 30 mass%.

9. The method for producing glass raw material granules according to any one of Claims 1 to 8, wherein in the composition based on oxides of glass obtainable from the granules, the total content of SrO and BaO is at most 40 mass%.

10. The method for producing glass raw material granules according to any one of Claims 1 to 9, wherein in the composition based on oxides of glass obtainable from the granules, the total content of CaO, SrO and BaO is at most 45 mass%.

11. A method for producing a glass article, comprising a glass melting step of heating glass raw material granules obtainable by the method for producing glass raw material granules as defined in any one of Claims 1 to 10 to obtain molten glass, a molding step of molding the obtained molten glass, and an annealing step of annealing the glass after the molding.

12. Glass raw material granules being granules to be used for producing glass, which comprise at least silica and an aluminum source and which have peaks from 0 to 25 ppm and from 60 to 85 ppm in the ²⁷Al MAS NMR spectrum, wherein the ratio of the height y of the peak of from 60 to 85 ppm to the height x of the peak of from 0 to 25 ppm (y/x) is at least 0.04.

13. A method for producing molten glass, comprising a glass melting step of heating the glass raw material granules as defined in Claim 12 to obtain molten glass.

14. A method for producing a glass article using the production method for molten glass as defined in Claim 13, which comprises said glass melting step, a molding step of molding the obtained molten glass, and an annealing step of annealing the glass after the molding.
